Europäisches Patentamt

European Patent Office

Office européen des brevets

(11) Veröffentlichungsnummer: **0 278 088 B1**

(12) **EUROPÄISCHE PATENTSCHRIFT**

(45) Veröffentlichungstag der Patentschrift: **06.11.91**

(51) Int. Cl.⁵: **B60G 3/20**, B60G 15/06

(21) Anmeldenummer: **87118474.3**

(22) Anmeldetag: **14.12.87**

(54) **Radaufhängung.**

(30) Priorität: **10.02.87 DE 3704019**

(43) Veröffentlichungstag der Anmeldung:
**17.08.88 Patentblatt 88/33**

(45) Bekanntmachung des Hinweises auf die
Patenterteilung:
**06.11.91 Patentblatt 91/45**

(84) Benannte Vertragsstaaten:
**DE ES FR GB IT SE**

(56) Entgegenhaltungen:
**DE-A- 2 633 402**
**FR-A- 1 573 273**
**GB-A- 2 137 146**

(73) Patentinhaber: **Dr.Ing.h.c. F. Porsche Aktiengesellschaft**
**Porschestrasse 42**
**W-7000 Stuttgart 40(DE)**

(72) Erfinder: **Achleitner, August, Dipl.-Ing.**
**Blammerbergstrasse 83**
**W-7252 Weil der Stadt(DE)**

## Beschreibung

Die Erfindung bezieht sich auf eine Radaufhängung nach dem Oberbegriff des Anspruchs 1.

Aus der DE-OS 26 33 402 ist eine gattungsgemäße Radaufhängung mit einem Stoßdämpfer bekannt geworden, der in seinem zylindrischen Rohrteil mit einer Eindrückung versehen ist, damit eine Achsantriebswelle unbehindert nahe des Stoßdämpfers vorbeiführbar ist. Eindrückungen im zylindrischen Rohrteil des Dämpfers sind bei Zweirohrdämpfern am Außenrohr möglich. Dagegen sind solche Eindrückungen bei Einrohrdämpfern aufgrund des beweglichen Kolbens im Zylinder des Dämpfers nur in einen bestimmten Bereich anzubringen und diese Anbringung am kolbenführenden Rohr nur mit einem erheblichen Aufwand durchzuführen ist. Aus der DE-OS 33 42 355 ist eine Radaufhängung mit einem Federbein beschrieben, das ein einem unteren Lenker zugerichtetes Verbindungselement aufweist. Dies ist derart als Gabel ausgeführt, daß eine Achsantriebswelle zwischen zwei Gabelzinken durchgeführt werden kann. Bei einer solchen die Antriebswelle zu beiden Seiten begrenzenden Ausführung ist es aufwendig, die Antriebswelle schnell und einfach ein- bzw. auszubauen, da dann das untere Ende des die Gabel bildenden Verbindungselements vom Lenker gelöst werden muß.

Der Erfindung liegt die Aufgabe zugrunde, eine Radaufhängung der gattungsgemäßen Art zu schaffen, bei der eine Achsantriebswelle unbehindert von einem Federbein anzuordnen ist und ein Ein- und Ausbau der Achsantriebswelle vereinfacht wird.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die zur Achsantriebswelle hin geöffnete nutförmige Ausnehmung im Verbindungselement, die Welle eine Lage innerhalb der Umfangskontur des Elements einnehmen kann, wobei das Verbindungselement selbst keinen wesentlich größeren Durchmesser als der zylindrische Teil des Federbeines aufweist. Auch ermöglicht die nach außen hin geöffnete Ausnehmung eine einfache und schnelle Montage der Achsantriebswelle, ohne daß das Verbindungselement bzw. das Federbein vom unteren Lenker gelöst werden muß.

Das Verbindungselement ist vorzugsweise so ausgebildet, daß ein endseitige Lagerteil zentrisch zum zylindrischen Rohrteil des Federbeines angeordnet ist.

Insbesondere ist die Ausnehmung so groß ausgeführt, daß die Bewegung der Achs- Antriebswelle bei Radbewegungen nicht behindert wird und zwischen dieser Welle und der Ausnehmung ein ausreichender Abstand vorgesehen ist. Da die Radbewegung und die daraus resultierende Lenkerbewegungen bekannt sind, kann die Kontur der Ausnehmung entsprechend der möglichen Bewegungen der Welle ausgeführt werden, wie es insbesondere in Anspruch 2 gekennzeichnet ist.

Ausführungsbeispiele der Erfindung sind in der Zeichnung dargestellt und werden im folgenden näher beschrieben.

Es zeigen:

Fig. 1     eine Vorderansicht einer Radaufhängung mit einer an einem Verbindungselement eines Federbeins vorbeigeführten Achsantriebswelle,

Fig. 2     einen Schnitt nach der Linie II-II der Fig. 1,

Fig. 3     eine weitere Ausführungsform eines Verbindungselements an einem Federbein mit einer wannenförmigen Ausnehmung,

Fig. 4     einen Schnitt nach der Linie IV-IV der Fig. 3 und

Fig. 4a     einen Schnitt nach der Linie V-V der Fig. 4 und

Fig. 5     eine weitere Ausführung eines Verbindungselements mit zwei Ausnehmungen.

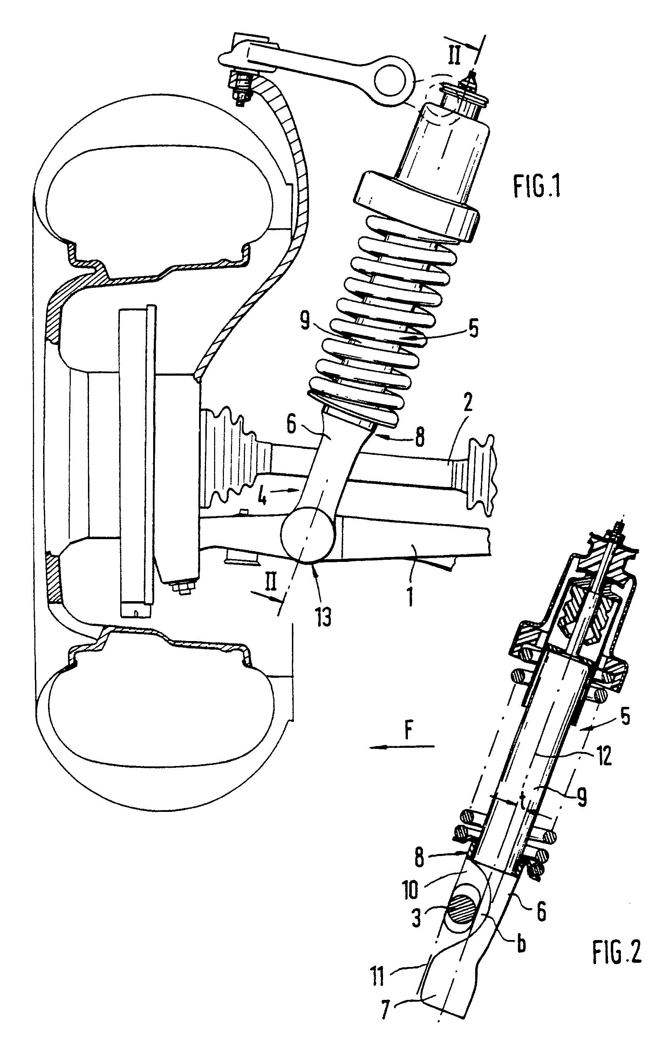

Eine Radaufhängung für ein Kraftfahrzeug umfaßt einen Querlenker 1, der unterhalb einer Achsantriebswelle 2 angeordnet ist und an dem über ein Gelenk 13 ein unteres Ende 4 eines Federbeines 5 gelenkig gelagert ist. Dieses untere Ende 4 besteht nach den Fig. 1 und 2 aus einem Verbindungselement 6, das endseitig ein Gelenk bzw. ein Lagerteil 7 trägt und an seinem gegenüberliegenden Ende 8 mit dem zylindrischen Teil 9 des Federbeines 5 fest verbunden ist.

Wie insbesondere Fig. 1 zeigt, weist das Verbindungselement 6 - in bezug auf das Fahrzeug - eine querverlaufende nutförmige Ausnehmung 10 auf, die bogenförmig ausgebildet ist. Innerhalb dieser Ausnehmung ist die Welle 3 mit Spiel b so angeordnet, daß sie etwa innerhalb der Außenkontur 11 des Verbindungselements 6 liegt. Die Ausnehmung 10 erstreckt sich in bezug auf die Welle 3 über die Längsmittenachse 12 des Federbeines 5 hinaus, so daß die Welle 3 unmittelbar an die Längsmittenachse 12 angrenzt (Fig. 2).

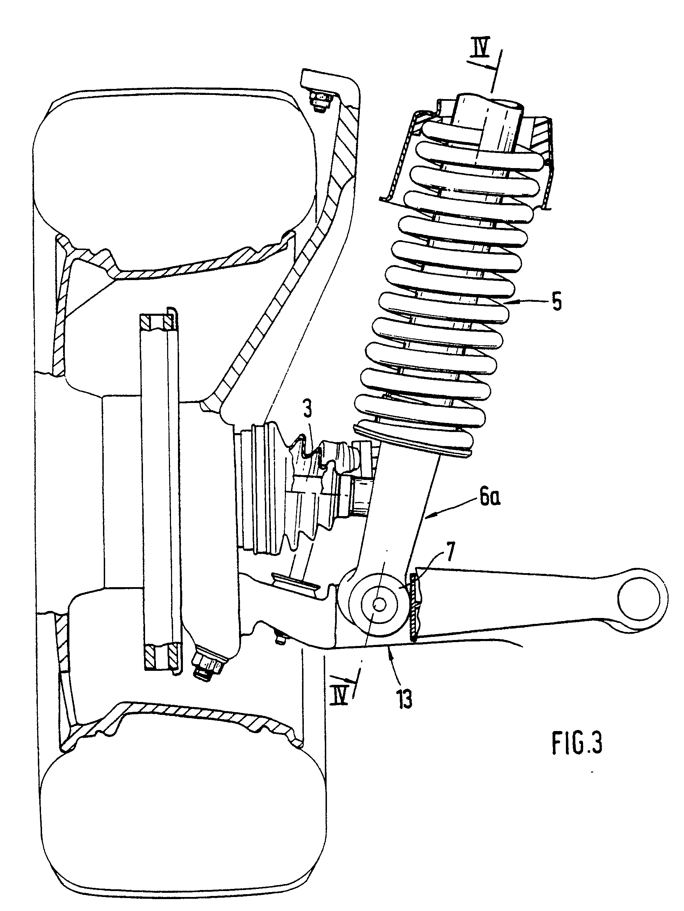

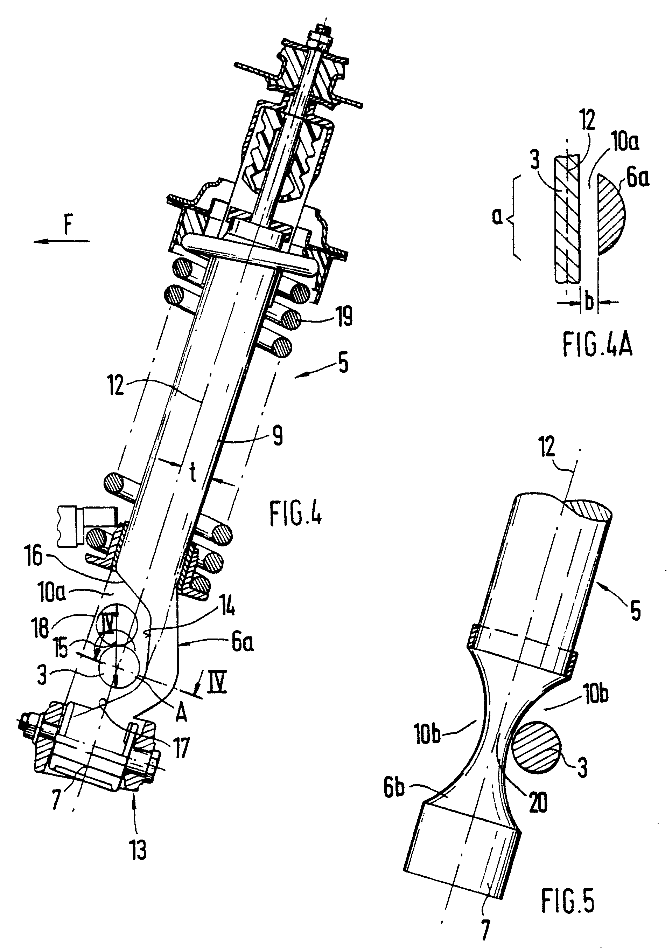

Nach einer weiteren Ausführung der Erfindung, wie in den Fig. 3 und 4 dargestellt, weist das Verbindungselement 6a eine - in bezug auf das Fahrzeug - querverlaufende nutförmige Ausnehmung 10a auf. Diese ist wannenförmig ausgeführt und weist eine Grundfläche 14 auf, die etwa parallel zur möglichen Bewegungsbahn 15 der Antriebswelle 3 verläuft, wie Fig. 4 näher zeigt. An diese Grundfläche 14 schließen sich eine obere Seitenfläche 16 und eine untere Seitenfläche 17 an, die die Welle 3 zweiseitig umschließen. Die wannenförmige Ausnehmung 10a weist vorzugsweise eine solche Tiefe auf, daß die Welle 3 in einer unteren Stellung A unmittelbar zentrisch zur Längsmittenachse 12 angeordnet ist. Das Verbindungselement 6a liegt bei dieser Ausführung innerhalb der Außenkontur der Schraubenfeder 19.

Nach einer weiteren Ausführung gemäß Fig. 5 ist das Verbindungselement 6b beidseitig mit einer Ausnehmung 10b versehen, die zwischen sich ein zentrisches Teil 20 zum Federbein 5 bildet. Durch eine solche Ausbildung des Verbindungselements 6b mit den Ausnehmungen 10b ist das Federbein 5 so einbaubar, daß nicht auf die Lage der Ausnehmung 10b geachtet werden muß und es gleichzeitig nahe an weiteren eng angrenzenden Teilen anzuordnen ist.

## Patentansprüche

1. Radaufhängung für ein Kraftfahrzeug, insbesondere mit Allradantrieb und mindestens einem Lenker, der unterhalb einer Achs- Antriebswelle, insbesondere einer Vorderrad-Achsantriebswelle, aufbauseitig schwenkbar gelagert und mit einem Radträger verbunden ist und zwischen dem Lenker und dem Fahrzeugaufbau ein Federbein angeordnet ist, das mit einem am Federbein-Zylinder anschließenden Verbindungselement seitlich an der Antriebswelle vorbeigeführt ist und mit dem tiefer liegenden Lenker in einem Lager gelenkig gehalten wird, dadurch gekennzeichnet, daß das Verbindungselement (6; 6a; 6b) des Federbeines (5) eine mit der Antriebswelle (3) quer verlaufende und zur Antriebswelle (3) hin geöffnete nutförmige Ausnehmung (10; 10a; 10b) aufweist, in der die Welle (3) mit einem Längsabschnitt (a) eintauchend mit einem Bewegungsabstand (b) zur Oberfläche der Ausnehmung angeordnet ist.

2. Aufhängung nach Anspruch 1, dadurch gekennzeichnet, daß die Ausnehmung (10; 10b) im Verbindungselement (6; 6b) bogenförmig ausgebildet ist.

3. Aufhängung nach Anspruch 1, dadurch gekennzeichnet, daß die Ausnehmung (10a) im Verbindungselement (6a) wannenförmig ausgeführt ist und eine zur etwa vertikalen Bewegungsbahn (15) der Welle (3) annähernd parallel verlaufende Grundfläche (14) vorgesehen ist, an die sich teilweise um die Welle (3) erstreckende Seitenflächen (16 und 17) anschließen.

4. Aufhängung nach den Ansprüchen 1 oder 2, dadurch gekennzeichnet, daß die Ausnehmung (10; 10a) eine über die Längsmittenachse (12) des Federbeines (5) hinausgehende Tiefe (t) aufweist und die Welle (3) nahe der Längsmittenachse (12) angeordnet ist.

5. Aufhängung nach Anspruch 1, dadurch gekennzeichnet, daß die Ausnehmung (10; 10a) eine solche Tiefe aufweist, daß die Querschnittsfläche der Antriebswelle (3) innerhalb der Außenkontur ( 11; 18) des Verbindungselements (6; 6a) liegt und daß das Verbindungselement (6; 6a) etwa dem Durchmesser des Federbein- Zylinders (9) bzw. der Schraubenfeder (19) entspricht.

6. Aufhängung nach einem oder mehreren der vorhergehenden Ansprüche, dadurch gekennzeichnet, daß jeweils zu beiden Seiten einer durch die Längsmittenachse (12) des Federbeines (5) verlaufenden Ebene eine Ausnehmung (10b) im Verbindungselement (6b) angeordnet ist, die eine Einschnürung mit einem zentrisch angeordneten Teil (20) bilden.

7. Aufhängung nach einem oder mehreren der vorhergehenden Ansprüche, dadurch gekennzeichnet, daß am freien Ende des Verbindungselements (6; 6a; 6b) ein Lagerteil (7) angeordnet ist, das mit dem die Ausformung bildenden Teil verbunden ist und zentrisch zum Zylinder (9) des Federbeines (5) angeordnet ist.

## Claims

1. A wheel suspension for a motor vehicle, in particular with all-wheel drive and at least one guide rod pivotably mounted on the body below an axle drive shaft, in particular a front-wheel axle drive shaft, and connected to a wheel support, a shock-absorbing leg [being] arranged between the guide rod and the vehicle body and being guided laterally past the drive shaft by a connexion member adjacent to the cylinder of the shock-absorbing leg and being held in an articulated manner in a bearing by the guide rod situated at a lower level, characterized in that the connexion member (6; 6a; 6b) of the shock-absorbing leg (5) comprises a groove-shaped recess (10, 10a; 10b) which extends transversely with the drive shaft (3) and is open towards the drive shaft (3) and in which the shaft (3) is arranged with a longitudinal portion (a) entering within with play at a distance (b) from the surface of the recess.

2. A suspension according to Claim 1, characterized in that the recess (10; 10b) is made arcuate-shaped in the connexion member (6; 6b).

3. A suspension according to Claim 1, characterized in that the recess (10a) is formed in the shape of a trough in the connexion member (6a), and a base surface (14) is provided which extends substantially parallel to the substantially vertical path of travel (15) of the shaft (3) and to which are joined lateral surfaces (16 and 17) extending partly around the shaft (3).

4. A suspension according to Claim 1 or 2, characterized in that the recess (10; 10a) has a depth (t) extending over the longitudinal median axis (12) of the shock-absorbing leg (5) and the shaft (3) is arranged close to the longitudinal median axis (12).

5. A suspension according to Claim 1, characterized in that the recess (10; 10a) has a depth such that the cross-sectional surface of the drive shaft (3) lies inside the external profile (11; 18) of the connexion member (6; 6a), and the connexion member (6; 6a) corresponds substantially to the diameter of the cylinder (9) of the shock-absorbing leg or the helical spring (19).

6. A suspension according to one or more of the preceding Claims, characterized in that a recess (10b) forming a waist with a portion (20) arranged centrally is provided in the connexion member (6b) on both sides of a plane extending through the longitudinal median axis (12) of the shock-absorbing leg (5).

7. A suspension according to one or more of the preceding Claims, characterized in that a bearing part (7), which is connected to the part forming the recess and is arranged centrally with respect to the cylinder (9) of the shock-absorbing leg (5), is arranged at the free end of the connexion member (6; 6a; 6b).

**Revendications**

1. Suspension de roue pour véhicule automobile, notamment avec traction sur toutes les roues et au moins un bras oscillant qui est monté pivotant, côté carrosserie, au-dessous d'un arbre d' entraînement d'essieu notamment d'un arbre d'entraînement d'essieu avant et est relié à un support de roue et dans laquelle, entre le bras oscillant et la carrosserie du véhicule se trouve une jambe de force à ressort qui, avec un élément de liaison faisant suite au cylindre de la jambe de force à ressort, passe sur le côté de l'arbre d'entraînement et est maintenue articulée dans un palier, avec le bras oscillant situé plus bas, caractérisée en ce que l'élément de liaison (6 ; 6a ; 6b) de la jambe de force à ressort (5) présente un évidement (10 ; 10a ; 10b) en forme de rainure, transversal à l'arbre d'entraînement (3) et ouvert vers celui-ci, dans lequel l'arbre (3) pénètre par une partie longitudinale (a), avec une distance de déplacement (b) par rapport à la surface de l'évidement.

2. Suspension selon la revendication 1, caractérisée en ce que l'évidement (10 ; 10b) pratiqué dans l'élément de liaison (6 ; 6b) a la forme d'un arc.

3. Suspension selon la revendication 1, caractérisée en ce que l'évidement (10a) pratiqué dans l'élément de liaison (6a) est en forme de cuvette et en ce qu'il est prévu une surface de fond (14) à peu près parallèle à la trajectoire de déplacement vertical (15) de l'arbre (3), surface à laquelle se raccordent les surfaces latérales (16 et 17) s'étendant partiellement autour de l'arbre 3.

4. Suspension selon les revendications 1 ou 2, caractérisée en ce que l'évidement (10 ; 10a) présente une profondeur (t) dépassant l'axe médian longitudinal (12) de la jambe de force à ressort (5) et l'arbre (3) est placé à proximité de l'axe médian longitudinal (12).

5. Suspension selon la revendication 1, caractérisée en ce que l'évidement (10 ; 10a) a une profondeur telle que la surface de section transversale de l'arbre d'entraînement (3) se situe à l'intérieur du contour extérieur (11 ; 18) de l'élément de liaison (6 ; 6a) et en ce que l'élément de liaison (6 ; 6a) correspond à peu près au diamètre du cylindre de la jambe de force à ressort (9) ou du ressort hélicoïdal (19).

6. Suspension selon une ou plusieurs des revendications précédentes, caractérisée en ce qu'il est pratiqué dans l'élément de liaison (6b) , de part et d'autre d'un plan passant par l'axe médian longitudinal (12) de la jambe de force à ressort (5), un évidement (10b) qui forme un étranglement avec une partie (20) placée au centre.

7. Suspension selon une ou plusieurs des revendications précédentes, caractérisée en ce qu'à l'extrémité libre de l'élément de liaison (6 ; 6a ; 6b), il est prévu un élément formant palier (7) qui est relié à la partie formant l'étranglement et qui est placé de manière centrée par rapport au cylindre (9) de la jambe de force à ressort (5).

FIG.1

FIG.2

FIG.3

FIG.4

FIG.4A

FIG.5